(19) Europäisches Patentamt
European Patent Office
Office européen des brevets

(11) EP 4 787 021 A1

(12) EUROPEAN PATENT APPLICATION
published in accordance with Art. 153(4) EPC

(43) Date of publication:
05.08.2026 Bulletin 2026/32

(51) International Patent Classification (IPC):
G01S 17/89 (2020.01)          G01S 7/481 (2006.01)
G02B 3/00 (2006.01)           G02B 19/00 (2006.01)
G02B 27/09 (2006.01)

(21) Application number: 24872748.9

(52) Cooperative Patent Classification (CPC):
G01S 7/481; G01S 17/89; G02B 3/00; G02B 19/00;
G02B 27/09

(22) Date of filing: 27.08.2024

(86) International application number:
PCT/KR2024/012767

(87) International publication number:
WO 2025/071040 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023  KR 20230130577
11.10.2023  KR 20230135196

(71) Applicant: LG Innotek Co., Ltd.
Seoul 07796 (KR)

(72) Inventors:
• KIM, Tae Kyung
  Seoul 07796 (KR)
• PARK, Hye Mi
  Seoul 07796 (KR)
• KIM, Dae Geun
  Seoul 07796 (KR)
• KIM, Ho Young
  Seoul 07796 (KR)

(74) Representative: Plasseraud IP
104 Rue de Richelieu
CS92104
75080 Paris Cedex 02 (FR)

(54) **LIDAR APPARATUS**

(57) A lidar apparatus according to an embodiment of the present invention includes: a light-emitting unit for emitting an optical signal to an object; and a light-receiving unit for receiving an optical signal reflected from the object. The light-receiving unit includes: an image sensor including a light-receiving surface having a long axis in a first direction; a first lens unit disposed on the image sensor; a window disposed on the first lens unit; and a filter disposed between the image sensor and the window, wherein at least one of the filter or the window is tilted, with respect to the light-receiving surface of the image sensor, about the virtual first axis parallel to the long axis or a second axis inclined with respect to the first axis.

FIG. 26

1200

**Description**

[Technical Field]

The present invention relates to a LiDAR apparatus.

[Background Art]

Light Detection and Ranging (LiDAR) measures a distance to a target object or forms a shape of the target object using laser pulses emitted from a light emitting unit and then reflected and returned from the target object. LiDAR is applied to various technical fields requiring three-dimensional images. For example, LiDAR may be applied to various technical fields such as meteorology, aviation, aerospace, vehicles, and the like. In recent years, the proportion of LiDAR in the field of autonomous driving has rapidly increased.

In general, a light emitting unit of a LiDAR generates an output optical signal and irradiates an object with the output optical signal, a light receiving unit receives an input optical signal reflected from the object, and an information generation unit generates information about the object using the input optical signal received by the light receiving unit.

The LiDAR may be broadly classified into mechanical LiDAR and solid state-type LiDAR. The mechanical LiDAR may acquire a field of view of 360 degrees by rotating a light emitting unit and a light receiving unit. The solid state-type LiDAR may be, for example, one of a Micro Electro Mechanical System (MEMS) LiDAR, a flash LiDAR, and an Optical Phase Array (OPA) LiDAR. In the MEMS LiDAR, a tilt angle of a mirror may be finely changed by an electrical signal. In the flash LiDAR, an optical flash may be used, and a single large-area laser pulse may illuminate a forward environment. In the OPA LiDAR, an optical phase modulator may control a speed of light passing through a lens, and, accordingly, an optical wavefront shape may be controlled.

In general, the light receiving unit of the mechanical LiDAR includes an image sensor having a one-dimensional array structure, and a ghost phenomenon due to double reflection easily occurs. Noise caused by the ghost phenomenon may provide incorrect information to the LiDAR instead of light reflected from an actual object, and this may generate a virtual image in a point cloud, which is a result of object detection.

[Disclosure of Invention]

[Technical Problem]

The present invention is directed to providing a Light Detection and Ranging (LiDAR) apparatus that outputs collimated light to minimize noise caused by a ghost phenomenon and prevent loss of irradiated light.

Problems to be solved by the present invention are not limited to those mentioned above, and other problems that have not been mentioned will be clearly understood by those skilled in the art from the following description.

[Technical Solution]

In order to achieve the above-described object, a Light Detection and Ranging (LiDAR) apparatus according to an embodiment of the present invention includes a light emitting unit configured to emit an optical signal to an object and a light receiving unit configured to receive an optical signal reflected from the object, wherein the light receiving unit includes an image sensor including a light receiving surface having a long axis in a first direction, a first lens unit disposed on the image sensor, a window disposed on the first lens unit, and a filter disposed between the image sensor and the window, and at least one of the filter and the window is tilted with respect to the light receiving surface of the image sensor about a virtual first axis parallel to the long axis or about a second axis inclined with respect to the first axis.

The image sensor may include a pixel array disposed in the first direction and a second direction perpendicular to the first direction and the number of pixels disposed in the first direction may be greater than the number of pixels disposed in the second direction, and at least one of the filter and the window may be tilted about the first direction as the rotation axis.

Each of the filter and the window may be tilted about the first direction as the rotation axis.

The filter and the window may be tilted within a range of 0.5 to 5 degrees about the first direction as the rotation axis.

The filter and the window may be tilted within a range of 1 to 3 degrees about the first direction as the rotation axis.

One of the filter and the window may be tilted clockwise about the first direction as the rotation axis, and the other of the filter and the window may be tilted counterclockwise about the first direction as the rotation axis.

The LiDAR apparatus may include a micro lens array disposed between the image sensor and the first lens unit and having a long axis in the first direction, and at least one of the filter and the window may be tilted with respect to the micro lens array about a virtual axis parallel to the long axis of the micro lens array.

The micro lens array may include a plurality of micro lenses disposed in the first direction and a second direction perpendicular to the first direction, and the number of micro lenses disposed in the first direction may be greater than the number of micro lenses disposed in the second direction.

The image sensor may include an m*n pixel array, and a ratio of m to n may be 8 or greater.

The filter may include a filter surface including the first axis and the second axis.

The window may include a window surface including the first axis and the second axis.

The first axis may be spaced apart from the long axis of the image sensor in an optical axis direction.

The second axis may be perpendicular to the first axis.

A LiDAR apparatus includes a light receiving unit rotated based on a rotation axis parallel to a first direction, wherein the light receiving unit includes an image sensor, a first lens unit disposed spaced apart from the image sensor in an optical axis direction perpendicular to the first direction, a window disposed spaced apart from the filter in the optical axis direction, and a filter disposed between the image sensor and the window, and at least one of the filter and the window is tilted about a first axis parallel to the first direction.

The image sensor may have a long axis in the first direction.

The image sensor may be disposed to face the optical axis direction, and at least one of the filter and the window may be disposed to face a direction offset from the optical axis direction.

The LiDAR apparatus may include a micro lens array disposed between the image sensor and the first lens unit, and the micro lens array may have a long axis in the first direction.

A LiDAR apparatus includes a light emitting unit configured to emit an optical signal to an object and a light receiving unit configured to receive an optical signal reflected from the object, wherein the light receiving unit includes an image sensor including a light receiving surface, a first lens unit disposed on the image sensor, a window disposed on the first lens unit, and a filter disposed between the image sensor and the window, and at least one of the filter and the window is tilted about the light receiving surface of the image sensor.

At least one of the filter and the window may not be parallel to the light receiving surface.

The image sensor may include a pixel array including the light receiving surface and a micro lens array disposed on the pixel array.

At least one of the filter and the window may be tilted with respect to a light receiving surface of the micro lens array.

A second lens unit that collects and outputs light emitted from the light source according to the embodiment includes a first lens surface facing the light source unit and a second lens surface disposed opposite to the first lens surface, the first lens surface includes a plurality of first unit patterns arranged in the first direction and the first unit patterns extend in a second direction perpendicular to the first direction, and the second lens surface includes a second unit pattern having a long axis extending in the first direction.

The first lens surface and the second lens surface may be asymmetric with respect to each other.

The second unit pattern may be aspherical.

The first unit pattern may have an arc shape based on an axis parallel to the second direction, and the second unit pattern may have an arc shape based on an axis parallel to the first direction.

The first unit pattern may be disposed such that a distance between a radially outermost point based on a third direction perpendicular to the first direction and the second direction and an axis parallel to the second direction is constant in the second direction.

A recessed portion recessed toward the second lens surface from the first lens surface may be disposed between two adjacent first unit patterns.

A distance between a plurality of recessed portions in the second direction may be constant.

The second lens surface may be disposed such that a distance between the radially outermost point based on the third direction and an axis parallel to the first direction is constant in the first direction.

An effective focal length (EFL) of the second lens surface may be 4 to 8 times an EFL of the first lens surface.

An F-number of the second lens surface may be 0.2 to 0.5 times an F-number of the first lens surface.

A LiDAR apparatus according to an embodiment includes a light source unit that emits light and a second lens unit that collects and outputs the light emitted from the light source, wherein the second lens unit includes a first lens surface facing the light source unit and a second lens surface disposed opposite to the first lens surface, the first lens surface includes a plurality of first unit patterns arranged in a first direction and the first unit patterns extend in a second direction perpendicular to the first direction, the second lens surface includes a second unit pattern having a long axis extending in the first direction, and the second lens unit collects and outputs the light emitted from the light source.

The light source unit may include a plurality of light sources disposed in the first direction and configured to emit light in a third direction perpendicular to the first direction and the second direction.

The first unit patterns may have an arc shape based on an axis parallel to the second direction and may overlap any one of the plurality of light sources in the third direction.

A length of the light source unit in the first direction may be shorter than a length of the first lens surface in the first direction.

When a reflective-type volume Bragg grating (VBG) is disposed spaced apart from the second lens unit in the third direction, light reflected from the VBG may move toward the light source unit along the same optical path.

The plurality of light sources may emit light having a wavelength band of 1350 nm to 1450 nm.

[Advantageous Effects]

A Light Detection and Ranging (LiDAR) apparatus according to one embodiment of the present invention for solving the aforementioned problems can provide an effect of outputting collimated light to minimize noise caused by a ghost phenomenon and prevent loss of irradiated light.

Effects of the present invention are not limited to those mentioned above, and other effects not mentioned will be clearly understood by those skilled in the art from the description of claims.

In addition, the effects of the present invention can be described in more detail in the detailed description of the present invention and are not necessarily limited to those described above.

[Description of Drawings]

Not only the following detailed description of exemplary embodiments of the present application but also the foregoing summary will be better understood when read in conjunction with the accompanying drawings.

For purposes of illustrating the present invention, exemplary embodiments are shown in the drawings.

However, it should be understood that the present application is not limited to the precise arrangements and instrumentalities shown.

FIG. 1 is a block diagram of a Light Detection and Ranging (LiDAR) apparatus according to one embodiment of the present invention.

FIG. 2 is a top view of an image sensor according to the embodiment of the present invention.

FIG. 3 is a bottom view of a micro lens array according to the embodiment of the present invention.

FIG. 4 is a cross-sectional view of an image sensor and a micro lens array taken along a first direction according to the embodiment of the present invention.

FIG. 5 is a cross-sectional view of an image sensor and a micro lens array taken along a second direction according to the embodiment of the present invention.

FIG. 6 is a cross-sectional view of a light receiving unit taken along a first direction according to the embodiment of the present invention.

FIG. 7 is a cross-sectional view of a light receiving unit taken along a second direction according to the embodiment of the present invention.

FIG. 8 illustrates an example of a ghost image.

FIG. 9 illustrates an optical path layout for simulating a cause of ghost generation.

FIG. 10 illustrates a result of simulating a cause of ghost generation.

FIG. 11 illustrates simulation results according to tilts of a window and a filter.

FIG. 12 illustrates results of performing ghost analysis for each angle of an object in a case in which neither a window nor a filter is tilted and in a state in which the window is not tilted and only the filter is tilted by 2 degrees.

FIG. 13 illustrates results of performing ghost analysis for each angle of an object while tilting the window within a range of -2 degrees to 2 degrees in a state in which the filter is tilted by 2 degrees.

FIG. 14 is a view for describing a light emitting unit according to the embodiment of the present invention.

FIG. 15 is a view for describing a first surface of a LiDAR apparatus according to the embodiment of the present invention.

FIG. 16 is a view for describing a second surface of a LiDAR apparatus according to the embodiment of the present invention.

FIG. 17 is a view for describing a first unit pattern of a LiDAR apparatus according to the embodiment of the present invention.

FIG. 18 is a view for describing a second unit pattern of a LiDAR apparatus according to the embodiment of the present invention.

FIG. 19 is a view for describing a relationship between a light source and a first surface of a LiDAR apparatus according to the embodiment of the present invention.

FIG. 20 is a view for describing a first unit pattern and a light emitting unit of a LiDAR apparatus according to the embodiment of the present invention.

FIG. 21 is a view for describing an optical path through a first surface of a LiDAR apparatus according to the embodiment of the present invention.

FIG. 22 is a view for describing an optical path through a second surface of a LiDAR apparatus according to the embodiment of the present invention.

FIG. 23 is a view for describing a focus of a LiDAR apparatus according to the embodiment of the present invention.

FIG. 24 is a view for describing a propagation optical path and a reflected optical path through a first surface of a LiDAR apparatus according to the embodiment of the present invention.

FIG. 25 is a view for describing a propagation optical path and a reflected optical path through a second surface of a LiDAR apparatus according to the embodiment of the present invention.

FIG. 26 is a perspective view of a LiDAR system according to the embodiment of the present invention.

FIG. 27 is an exploded view of a LiDAR system according to the embodiment of the present invention.

FIG. 28 is an exploded view of a LiDAR apparatus according to the embodiment of the present invention.

[Modes of the Invention]

Hereinafter, exemplary embodiments of the present invention will be described in detail with reference to the accompanying drawings.

However, the technical idea of the present invention is not limited to some embodiments to be described but may be implemented in various different forms, and within the scope of the technical idea of the present invention, one or more among components in the embodiments may be used by being selectively combined and substituted.

Further, unless specifically defined and described, terms used in the embodiments of the present invention (including technical and scientific terms) may be interpreted as having meanings which are generally understood by those skilled in the art to which the present invention pertains, and commonly used terms such as terms defined in dictionaries may be interpreted in consideration of the contextual meaning of the related art.

The terms used in the embodiments of the present invention are for the purpose of describing the embodiments only and are not intended to limit the invention.

In the present specification, the singular forms may include the plural forms unless the context clearly dictates otherwise, and when described as "at least one (or one or more) among A, B, and (or) C," it may include one or more of all possible combinations of A, B, and C.

In addition, when describing components of embodiments of the present invention, terms such as first, second, A, B, (a), (b), etc., may be used.

These terms are only for distinguishing the components from other components, and the essence, sequence, or order of the components is not limited by these terms.

In addition, when a component is described as being "linked," "coupled," or "connected" to another component, the component is not only directly linked, coupled, or connected to another component, but also "linked," "coupled," or "connected" to another component with still another component disposed between the component and the other component.

Further, when a component is described as being formed or disposed "on (above) or below (under)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

A Light Detection and Ranging (LiDAR) apparatus according to an embodiment of the present invention may refer to a LiDAR apparatus mounted on a vehicle to measure a distance between the vehicle and an object, and is not limited thereto. The LiDAR apparatus according to the embodiment of the present invention may extract depth information using a Time of Flight (ToF) principle or a phase shift principle. In the present specification, the LiDAR apparatus may also be referred to as an information generation device, a depth information generation device, or a camera device.

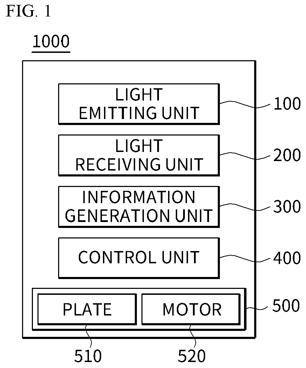

FIG. 1 is a block diagram of a LiDAR apparatus according to one embodiment of the present invention.

Referring to FIG. 1, a LiDAR apparatus 1000 according to the embodiment of the present invention includes a light emitting unit 100, a light receiving unit 200, an information generation unit 300, and a control unit 400.

The light emitting unit 100 may generate and output an output optical signal in the form of a pulse wave or in the form of a continuous wave. The continuous wave may be in the form of a sinusoid wave or a squared wave. By generating the output optical signal in the form of a pulse wave or a continuous wave, the LiDAR apparatus 1000 may detect a time difference or a phase difference of the output optical signal output from the light emitting unit 100 and an input optical signal reflected from a target area and then input to the light receiving unit 200. In the present specification, "output light" may refer to light output from the light emitting unit 100 and incident on an object, and "input light" may refer to light reflected from a target area and input on the light receiving unit 200, after being output from the light emitting unit 100 and reaching the target area. From the viewpoint of the target area, the output light may be incident light, and the input light may be reflected light. In the present specification, the target area may be used interchangeably with an object or a target.

The light emitting unit 100 includes a light source unit 110 and a lens unit 120.

The light source unit 110 generates and outputs laser pulses. The light source unit 110 may use a light emitting diode (LED), and may have a form in which a plurality of light emitting diodes are arranged in a predetermined pattern. Alternatively, the light source unit 110 may include an organic light emitting diode (OLED) or a laser diode (LD). Alternatively, the light source unit 110 may be a vertical cavity surface emitting laser (VCSEL). The VCSEL is a type of laser diode that converts an electrical signal into an optical signal and may output light having a wavelength of about 800 nm to 1000 nm, for example, about 850 nm or about 940 nm. The light source unit 110 repeatedly blinks on and off at predetermined time intervals to generate an output optical signal in the form of a pulse wave or a continuous wave. The predetermined time interval may be a frequency of the output optical signal. Alternatively, the light source unit 110 may include a plurality of light sources 111, the plurality of light sources 111 may emit light having a wavelength band of 1350 nm to 1450 nm, and the plurality of light sources 111 may be LEDs as described above.

The lens unit 120 may collect light output from the light source unit 110 and output the collected light to the outside. The lens unit 120 may be disposed above the light source unit 110 and spaced apart from the light source unit 110. Here, "above the light source unit 110" may refer to a side from which light is output from the light source unit 110. The lens unit 120 may include at least one lens, and when the lens unit 120 includes a plurality of lenses, the lenses may be aligned with respect to a central axis to form an optical system. Here, the central axis may be identical to an optical axis of the optical system. The lens unit 120 may also include a diffusion member that receives light output from the light source unit 110 and then outputs the received light by refracting or diffracting the light. This will be described in more detail with reference to the drawings to be described below.

The light receiving unit 200 may receive an optical signal reflected from the target area. In this case, the received optical signal may be an optical signal output by the light emitting unit 100 reflected from the target area.

The light receiving unit 200 includes an image sensor, a lens unit 230 disposed on the image sensor, and a filter.

The optical signal reflected from the target area may pass through the lens unit 230 of the light receiving unit 200. An optical axis of the lens unit 230 of the light receiving unit 200 may be aligned with an optical axis of the image sensor. The filter may be disposed on an optical path between the target area and the image sensor. The filter may filter light having a predetermined wavelength range. The filter may transmit light of a specific wavelength. For example, the filter may transmit light in an infrared band and block light outside the infrared band. The image sensor may receive an optical signal and output the received optical signal as an electrical signal. The image sensor may detect light having a wavelength corresponding to a wavelength of light output from the light emitting unit 100. For example, the image sensor may detect light in the infrared band.

The image sensor may be configured as a structure in which a plurality of pixels are arranged in a grid form.

The light receiving unit 200 and the light emitting unit 100 may be disposed side by side. The light receiving unit 200 may be disposed adjacent to the light emitting unit 100. The light receiving unit 200 may be disposed to face the same direction as the light emitting unit 100. Alternatively, the light receiving unit 200 and the light emitting unit 100 may be disposed to face different directions. When the light receiving unit 200 and the light emitting unit 100 are disposed to face different directions, an optical path redirecting member may be further disposed between the light receiving unit 200 and the light emitting unit 100.

The information generation unit 300 generates information on the target area using the input optical signal input to the light receiving unit 200. The information on the target area may include three-dimensional information on the target area. For example, the information on the target area may include depth information on the target area or shape information on the target area. For example, the information generation unit 300 may calculate depth information about an object using a time of flight taken for the output optical signal output from the light emitting unit 100 to be reflected from the object and then input to the light receiving unit 200. For example, the information generation unit 300 may calculate a time difference between the output optical signal and the input optical signal using an electrical signal received by the image sensor and calculate a distance between the target area and the LiDAR apparatus 1000 using the calculated time difference. For example, the information generation unit 300 may calculate a phase difference between the output optical signal and the input optical signal using an electrical signal received from the image sensor and calculate the distance between the target area and the LiDAR apparatus 1000 using the calculated phase difference.

The control unit 400 controls driving of the light emitting unit 100, the light receiving unit 200, and the information generation unit 300. The information generation unit 300 and the control unit 400 may be implemented in the form of a printed circuit board (PCB). In addition, the information generation unit 300 and the control unit 400 may be implemented in other forms. Alternatively, the control unit 400 may be included in a terminal or a vehicle in which the LiDAR apparatus 1000 according to the embodiment of the present invention is disposed. For example, the control unit 400 may be implemented in the form of an application processor (AP) of a smartphone equipped with the LiDAR apparatus 1000 according to the embodiment of the present invention, or may be implemented in the form of an electronic control unit (ECU) of a vehicle equipped with the LiDAR apparatus 1000 according to the embodiment of the present invention.

The LiDAR apparatus 1000 according to the embodiment of the present invention may be a mechanical LiDAR that rotates 360°. To this end, the LiDAR apparatus 1000 may further include a rotating unit 500. The rotating unit 500 may further include a plate 510 on which the light emitting unit 100 and the light receiving unit 200 are mounted, and a motor 520 that rotates the plate 510. Accordingly, the LiDAR apparatus 1000 may have a field of view (FOV) of 360°.

In the following detailed description of the present invention, for distinction between the lens unit 230 of the light receiving unit 200 and the lens unit 120 of the light emitting unit 100, the lens unit 230 of the light receiving unit 200 will be described as a first lens unit 230, and the lens unit 120 of the light emitting unit 100 will be described as a second lens unit 120.

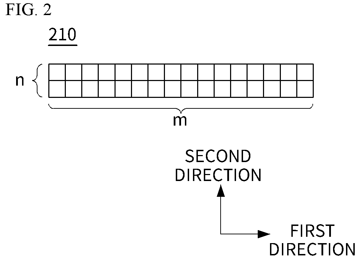

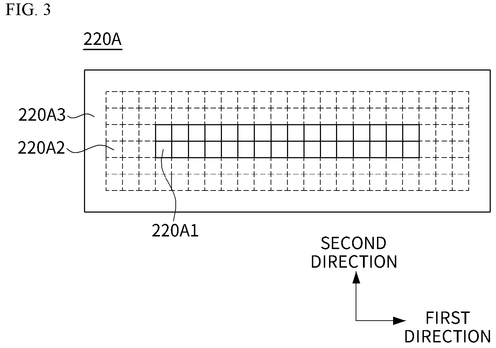

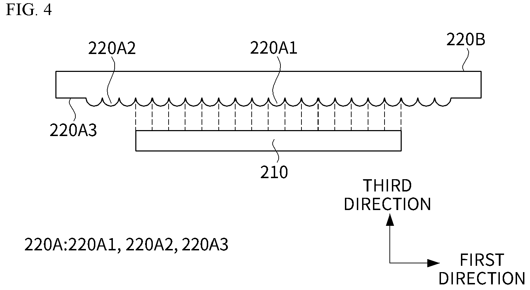

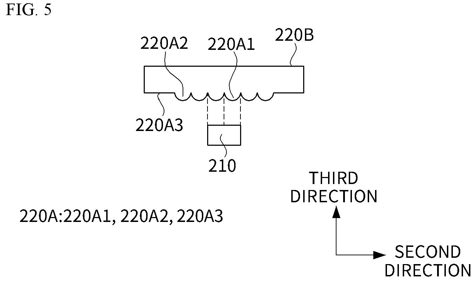

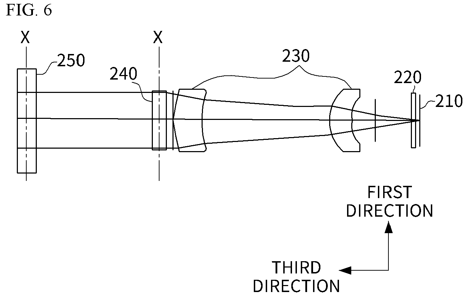

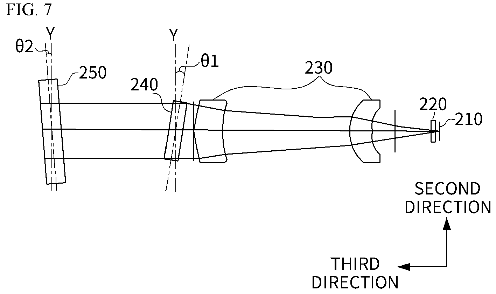

FIG. 2 is a top view of the image sensor according to the embodiment of the present invention, FIG. 3 is a bottom view of a micro lens array according to the embodiment of the present invention, FIG. 4 is a cross-sectional view of the image sensor and the micro lens array taken along a first direction according to the embodiment of the present invention, FIG. 5 is a cross-sectional view of the image sensor and the micro lens array taken along a second direction according to the embodiment of the present invention, FIG. 6 is a cross-sectional view of a light receiving unit taken along the first direction according to the embodiment of the present invention, and FIG. 7 is a cross-sectional view of the light receiving unit taken along the second direction according to the embodiment of the present invention.

Referring to FIGS. 2 to 7, the light receiving unit 200 included in the LiDAR apparatus 1000 according to the embodiment of the present invention includes an image sensor 210, a first lens unit 230 disposed on the image sensor 210, a window 250 disposed on the first lens unit 230, and a filter 240 disposed between the image sensor 210 and the window 250. Although the present specification illustrates that the filter 240 is disposed between the first lens unit 230 and the window 250, the present invention is not limited thereto, and the filter 240 may be disposed between the image sensor 210 and the window 250. According to another embodiment of the present invention, a micro lens array 220 disposed on the image sensor 210 may be further included. That is, the light receiving unit 200 included in the LiDAR apparatus 1000 according to the other embodiment of the present invention may include the image sensor 210, the micro lens array 220 disposed on the image sensor 210, the first lens unit 230 disposed on the micro lens array 220, the window 250 disposed on the first lens unit 230, and the filter 240 disposed between the image sensor 210 and the window 250.

According to the embodiment of the present invention, the image sensor 210 includes an active area and a non-active area surrounding the active area. The active area is a light receiving surface including a pixel array. Here, the pixel array may be a single photon avalanche detector (SPAD) array, and the SPAD array may include a plurality of SPADs. When a SPAD receives an optical signal, photons by an avalanche phenomenon may be detected.

Here, the image sensor 210 includes a pixel array disposed in the first direction and the second direction and has a long axis in the first direction. That is, the number of pixels disposed in the first direction in the image sensor 210 may be greater than the number of pixels disposed in the second direction. For example, the image sensor 210 according to the embodiment of the present invention includes an m*n pixel array, and m may be greater than n. When a ratio of m to n is 8 or more, the image sensor 210 may be referred to as a one-dimensional pixel array or a one-dimensional SPAD array.

According to the embodiment of the present invention, the image sensor 210 may include the one-dimensional pixel array. For example, the image sensor 210 according to the embodiment of the present invention may include a 16*2 pixel array, a 32*2 pixel array, a 64*2 pixel array, a 128*2 pixel array, a 256*2 pixel array, a 512*2 pixel array, or a 1024*2 pixel array.

When the light receiving unit 200 further includes the micro lens array 220, the micro lens array 220 is disposed on the image sensor 210 to be spaced apart from the image sensor 210. The micro lens array 220 includes a first surface 220A disposed to face the image sensor 210 and a second surface 220B opposite to the first surface 220A, and a plurality of micro lenses protrude from the first surface 220A to face the image sensor 210. For convenience of description, the first surface 220A of the micro lens array 220 may be referred to as a lower surface of the micro lens array 220, and the second surface 220B of the micro lens array 220 may be referred to as an upper surface of the micro lens array 220.

The first surface 220A of the micro lens array 220 according to the embodiment of the present invention includes an active area 220A1 including a plurality of micro lenses corresponding to the pixel array of the image sensor 210, a buffer area 220A2 including a plurality of micro lenses disposed to surround the active area 220A1, and a peripheral area 220A3 disposed to surround the buffer area 220A2.

Here, the active area 220A1 may be matched one-to-one with the pixel array. That is, when the image sensor 210 includes an m*n pixel array, the active area 220A1 may include m*n micro lenses, and pixels of the image sensor 210 and the micro lenses of the active area 220A1 may be matched one-to-one. Accordingly, among optical signals incident on the light receiving unit 200, optical signals incident on the active area 220A1 may be detected by the image sensor 210 and used to recognize an object. Optical signals incident on the light receiving unit 200 may be collected by the micro lenses of the active area 220A1 of the micro lens array 220, and thus optical reception efficiency for each pixel may be increased. Accordingly, the micro lens array 220 may also be referred to as a sensor window.

Meanwhile, the buffer area 220A2 may be disposed around the active area 220A1 to surround the active area 220A1. For example, when the image sensor 210 includes an m*n pixel array and the active area 220A1 includes m*n micro lenses, the first surface 220A of the micro lens array 220 may include a total of (m+2a)*(n+2b) micro lenses, including the buffer area 220A2. Here, a and b may be identical to or different from each other. For example, a and b may each be 1 or more and 10 or less, preferably 1 or more and 5 or less, and more preferably 2 or more and 3 or less. For example, a may be 3 and b may be 2. As described above, when the first surface 220A of the micro lens array 220 includes the buffer area 220A2 surrounding the active area 220A1, collecting efficiency of the active area 220A1 may be improved and loss of the optical signal may be reduced.

Meanwhile, the peripheral area 220A3 may be disposed around the buffer area 220A2 to surround the buffer area 220A2. In this case, the peripheral area 220A3 may be a flat surface. Accordingly, the micro lens array 220 may be bonded to a structure inside the image sensor 210 or the light receiving unit 200 through the peripheral area 220A3.

Referring to FIGS. 6 and 7, the first lens unit 230, the filter 240, and the window 250 are disposed on the image sensor 210. Alternatively, the first lens unit 230, the filter 240, and the window 250 are disposed on the image sensor 210 and the micro lens array 220. Here, the first lens unit 230 may include a plurality of lenses. For example, the first lens unit 230 may include two lenses disposed to be spaced apart from each other, and is not limited thereto. The filter 240 disposed on the first lens unit 230 may be a band-pass filter. For example, the filter 240 may be a band-pass filter that transmits only an infrared (IR) optical signal among optical signals input to the receiving unit 200. Although not illustrated, the first lens unit 230 and the filter 240 may be disposed in a lens barrel. Although the image sensor 210, the micro lens array 220, the first lens unit 230, and the filter 240 are illustrated as being sequentially disposed, the present invention is not limited thereto, and the image sensor 210, the micro lens array 220, the filter 240, and the first lens unit 230 may be disposed in this order.

The window 250 is disposed outside the lens barrel, and an optical signal reflected from an object passes through the window 250 and is then sequentially incident on the filter 240, the first lens unit 230, the micro lens array 220, and the image sensor 210. Accordingly, the window 250 may be referred to as a glass window or an external window. An optical signal output from the light emitting unit 100 may also be output to the outside through the window 250.

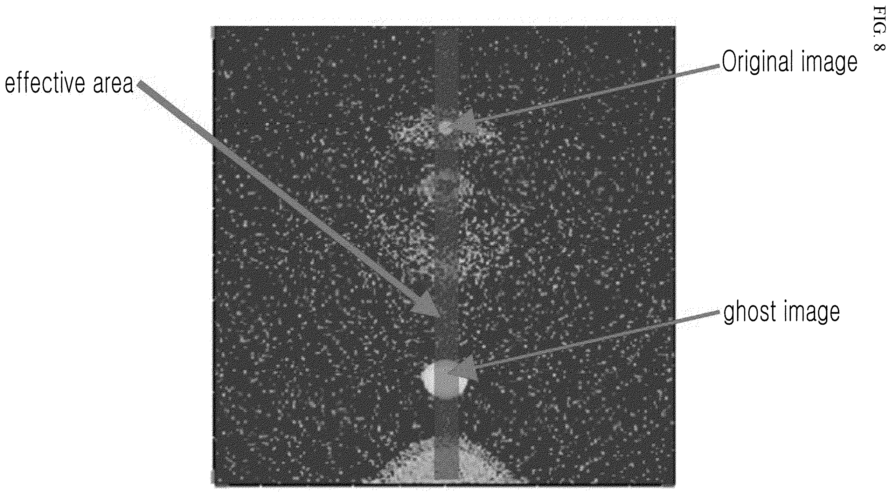

Meanwhile, in a process in which the optical signal reflected from the object is received by the image sensor 210 through the window 250, the filter 240, and the first lens unit 230, the optical signal may be reflected or refracted by the window 250, the filter 240, and the first lens unit 230, which may cause a ghost phenomenon due to a virtual point cloud. FIG. 8 illustrates an example of a ghost image.

According to the embodiment of the present invention, at least one of the filter 240 and the window 250 is disposed to be tilted based on the light receiving surface of the image sensor 210 or the active area of the micro lens array 220. Accordingly, at least one of the filter 240 and the window 250 may be disposed not to be parallel to the light receiving surface of the image sensor 210 or the active area of the micro lens array 220, thereby minimizing the ghost phenomenon.

More specifically, as described above, the image sensor 210 includes a pixel array disposed in the first direction and the second direction, and the number of pixels disposed in the first direction is greater than the number of pixels disposed in the second direction. Similarly, the first surface 220A of the micro lens array 220 may include a plurality of micro lenses disposed in the first direction and the second direction perpendicular to the first direction, and the number of micro lenses disposed in the first direction may be greater than the number of micro lenses disposed in the second direction. Accordingly, the first direction may refer to a long-axis direction of the image sensor 210 or the micro lens array 220, and the second direction may refer to a short-axis direction of the image sensor 210 or the micro lens array 220.

Here, at least one of the filter 240 and the window 250 is tilted with respect to the light receiving surface of the image sensor 210 about a virtual first axis parallel to the first direction, which is the long axis, or a virtual second axis inclined with respect to the first axis. Alternatively, at least one of the filter 240 and the window 250 is tilted with respect to the active area of the micro lens array 220 about a virtual first axis parallel to the first direction, which is the long axis, or a virtual second axis inclined with respect to the first axis.

Here, "tilted about the first axis" may refer to being rotated about an axis parallel to the first direction as a rotation axis. That is, "tilted about the first axis" may refer to being tilted about the first direction and may also be expressed as being rotated about the first direction as an axis. Here, the virtual first axis may be parallel to the long axis of the light receiving surface of the image sensor 210 or the active area of the micro lens array 220, and may be an axis spaced apart from the long axis of the light receiving surface of the image sensor 210 or the active area of the micro lens array 220 along an optical-axis direction. Accordingly, at least one of a filter surface of the filter 240 and a window surface of the window 250 may include the virtual first axis.

Here, the second axis may be a virtual second axis perpendicular to the first axis. That is, the virtual second axis may be parallel to a short axis of the light receiving surface of the image sensor 210 or the active area of the micro lens array 220 and may be an axis spaced apart from the short axis of the light receiving surface of the image sensor 210 or the active area of the micro lens array 220 in the optical-axis direction. Accordingly, at least one of the filter surface of the filter 240 and the window surface of the window 250 may include the virtual second axis.

Accordingly, in the present specification, the virtual first axis or the virtual second axis included in at least one of the filter surface of the filter 240 and the window surface of the window 250 may be referred to as the rotation axis.

When at least one of the filter 240 and the window 250 is tilted with respect to the light receiving surface of the image sensor 210 about the virtual first axis parallel to the first direction, which is the long axis, FIG. 6, which is a cross-sectional view of the light receiving unit 200 taken along the first direction, illustrates that the image sensor 210, the filter 240, and the window 250 are parallel to each other, whereas FIG. 7, which is a cross-sectional view of the light receiving unit 200 taken along the second direction, illustrates that the filter 240 is inclined with respect to the image sensor 210 and the window 250 is inclined with respect to the image sensor 210. That is, referring to FIG. 7, the filter 240 is inclined by a first angle θ1 with respect to a direction parallel to the image sensor 210, and the window 250 is inclined by a second angle θ2 with respect to a direction parallel to the image sensor 210.

Accordingly, the image sensor 210 may be disposed to face an optical-axis direction, that is, a third direction, whereas the filter 240 and the window 250 may be disposed to face a direction offset from the optical-axis direction, that is, a direction inclined with respect to the optical-axis direction.

As described above, when the filter 240 and the window 250 are disposed to be tilted about the long axis of the light receiving surface of the image sensor 210 or the active area of the micro lens array 220, that is, about the first direction as the rotation axis, a ghost image may be eliminated from the active area 220A1 of the micro lens array 220.

Here, the filter 240 and the window 250 may be bonded or fastened in a tilted state about the long axis of the image sensor 210, that is, about the first direction as the rotation axis. For example, when the filter 240 is disposed in the lens barrel, the filter 240 may be bonded to an inner wall of the lens barrel in a tilted state about the long axis of the image sensor 210, that is, about the first direction as the rotation axis, or fixed to the lens barrel by a fastening member. Similarly, the window 250 may be bonded to a housing of the LiDAR apparatus 1000 or a support member (not illustrated) in a tilted state about the long axis of the image sensor 210, that is, about the first direction as the rotation axis, or fixed to the housing or the support member (not illustrated) by a fastening member.

According to the embodiment of the present invention, the filter 240 is tilted clockwise about the rotation axis, and the window 250 may be tilted counterclockwise about the rotation axis. Alternatively, according to the embodiment of the present invention, the filter 240 may be tilted counterclockwise about the rotation axis, and the window 250 may be tilted clockwise about the rotation axis. Alternatively, according to the embodiment of the present invention, the filter 240 may be tilted clockwise about the rotation axis, and the window 250 may be tilted clockwise about the rotation axis. Alternatively, according to the embodiment of the present invention, the filter 240 may be tilted counterclockwise about the rotation axis, and the window 250 may be tilted counterclockwise about the rotation axis.

According to the embodiment of the present invention, the filter 240 and the window 250 may be tilted within a range of 0.5 to 5 degrees about the rotation axis, preferably within a range of 1 to 3 degrees, and more preferably within a range of 1.5 to 2.5 degrees. When the filter 240 and the window 250 rotate below a lower limit of the numerical range about the rotation axis, it is difficult to obtain an effect of preventing a ghost, and when the filter 240 and the window 250 rotate beyond an upper limit of the numerical range about the rotation axis, an amount of an optical signal incident on the image sensor 210 may be reduced and thus object recognition may be difficult.

According to the embodiment of the present invention, the angle θ1 by which the filter 240 is tilted about the rotation axis may be identical to or different from the angle θ2 by which the window 250 is tilted about the rotation axis. For example, a tilting direction of the filter 240 and a tilting direction of the window 250 may be identical to each other, and a tilting angle of the filter 240 and a tilting angle of the window 250 may be identical to each other. Alternatively, the tilting direction of the filter 240 and the tilting direction of the window 250 may be identical to each other, and the tilting angle of the filter 240 and the tilting angle of the window 250 may be different from each other. Alternatively, the tilting direction of the filter 240 and the tilting direction of the window 250 may be different from each other, and the tilting angle of the filter 240 and the tilting angle of the window 250 may be identical to each other. For example, the filter 240 may rotate clockwise by 2 degrees about the first direction of the image sensor 210 as an axis, and the window 250 may rotate counterclockwise by 2 degrees about the first direction of the image sensor 210 as the axis. Alternatively, the filter 240 may rotate counterclockwise by 2 degrees about the first direction of the image sensor 210 as the axis, and the window 250 may rotate clockwise by 2 degrees about the first direction of the image sensor 210 as the axis. Alternatively, the tilting direction of the filter 240 and the tilting direction of the window 250 may be different from each other, and the tilting angle of the filter 240 and the tilting angle of the window 250 may also be different from each other.

As described above, when the filter 240 and the window 250 are disposed to be tilted about the rotation axis, a ghost image may be avoided in the active area 220A1 of the micro lens array 220 and accuracy of object recognition may be increased.

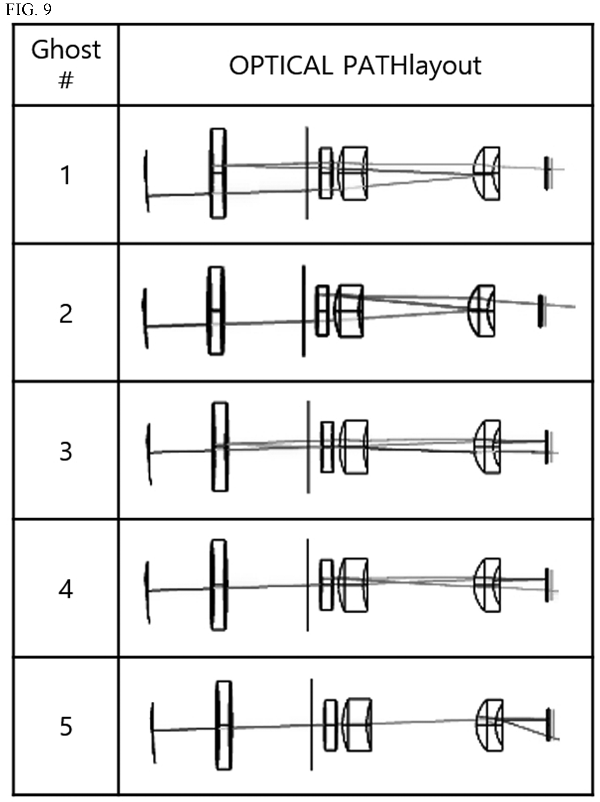

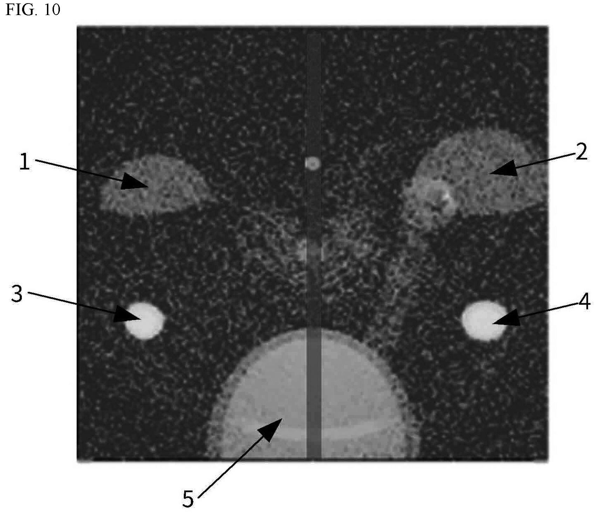

FIG. 9 is an optical path layout for simulating a cause of ghost generation, and FIG. 10 illustrates a result of simulating the cause of ghost generation.

Referring to FIGS. 9 and 10, ghost #1 is a ghost generated when double reflection is induced between a lens L2 disposed closer to the image sensor 210 among two lenses included in the first lens unit 230 and the window 250, ghost #2 is a ghost generated when double reflection is induced between the lens L2 disposed closer to the image sensor 210 among the two lenses included in the first lens unit 230 and the filter 240, ghost #3 is a ghost generated when double reflection is induced between a sensor window at a side of the image sensor 210 and the window 250, ghost #4 is a ghost generated when double reflection is induced between a sensor window at the side of the image sensor 240 and the filter 240, and ghost #5 is a ghost generated when double reflection is induced between the sensor window at the side of the image sensor 210 and the lens L2 disposed closer to the image sensor 210 among the two lenses included in the first lens unit 230.

As shown in FIG. 10 where ghost #3 and ghost #4 are most clearly indicated, in a one-dimensional sensor array structure according to the embodiment of the present invention, it can be seen that a cause of ghost generation having the greatest influence is double reflection by the filter 240 and the window 250.

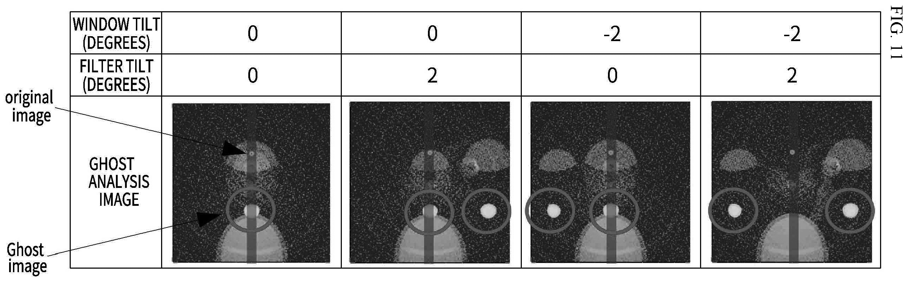

FIG. 11 illustrates simulation results according to tilts of the window and the filter.

Referring to FIG. 11, in an example in which neither the filter nor the window is tilted, that is, in an example in which the filter 240 is tilted by 0 degrees and the window 250 is tilted by 0 degrees about the first axis parallel to the first direction that is the long axis of the image sensor 210, it can be seen that a ghost image clearly exists on an active area of the one-dimensional sensor array structure. Next, in an example in which only the filter among the filter and the window is tilted, that is, in an example in which the filter 240 is tilted clockwise by only 2 degrees and the window 250 is tilted by 0 degrees about the first axis parallel to the first direction that is the long axis of the image sensor 210, it can be seen that one ghost image is avoided to outside the active area of the one-dimensional sensor array structure, but another ghost image still remains in the active area. Next, in an example in which only the window among the filter and the window is tilted, that is, in an example in which the window 250 is tilted counterclockwise by 2 degrees and the filter 240 is tilted by 0 degrees about the first axis parallel to the first direction that is the long axis of the image sensor 210, it can be seen that one ghost image is avoided to outside the active area of the one-dimensional sensor array structure, but another ghost image still remains in the active area. In contrast, in an example in which both the filter and the window are tilted, that is, in an example in which the filter 240 is tilted clockwise by 2 degrees and the window 250 is tilted counterclockwise by 2 degrees about the first axis parallel to the first direction that is the long axis of the image sensor 210, it can be seen that the ghost image is formed to be outside the active area of the one-dimensional sensor array structure.

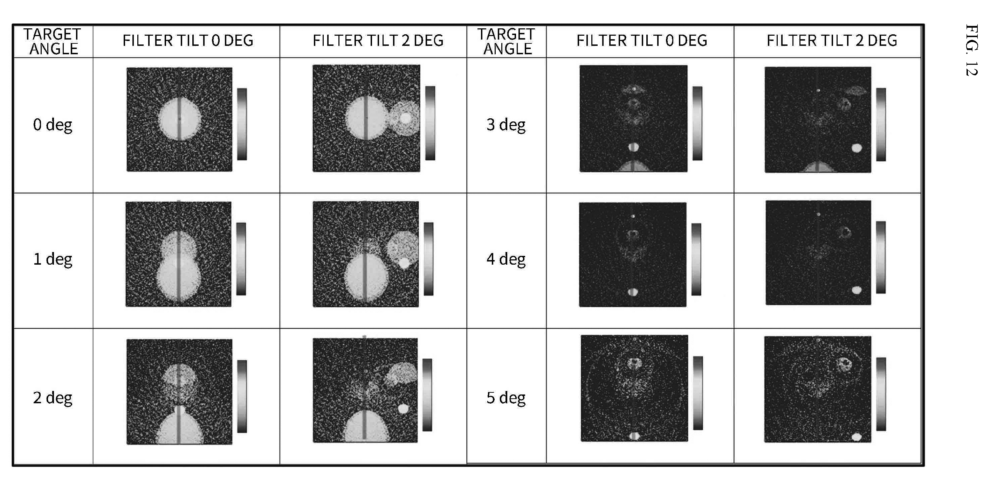

More specifically, FIG. 12 illustrates results of performing ghost analysis for each angle of an object in a case in which neither the window nor the filter is tilted and in a state in which the window is not tilted and only the filter is tilted by 2 degrees about the first axis parallel to the first direction that is the long axis of the image sensor 210. Referring to FIG. 12, it can be seen that, compared to the case in which neither the window nor the filter is tilted, the ghost phenomenon is mitigated at all angles of the object when the filter is tilted by 2 degrees.

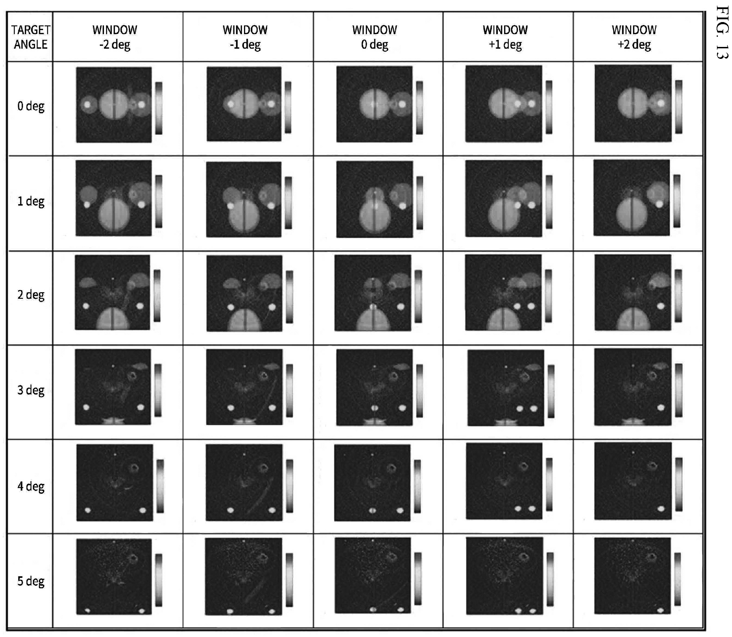

Next, FIG. 13 illustrates results of performing ghost analysis for each angle of an object while tilting the window within a range of -2 degrees to 2 degrees in a state in which the filter is tilted by 2 degrees about the first axis parallel to the first direction that is the long axis of the image sensor 210. Referring to FIG. 13, it can be seen that, when the window is also tilted in the state in which the filter is tilted, a ghost image is formed to be outside the active area of the one-dimensional sensor array structure. In particular, it can be seen that, when the window is tilted by 2 degrees, compared to a case in which the window is tilted by 1 degree, the ghost image is formed at a farther distance from the active area of the one-dimensional sensor array structure.

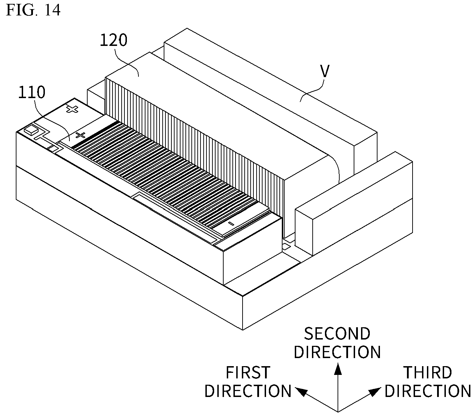

The light emitting unit 100 according to the present embodiment includes the light source unit 110 and the second lens unit 120, and FIGS. 14 to 19 may be referred to for a detailed description of the light source unit 110 and the second lens unit 120.

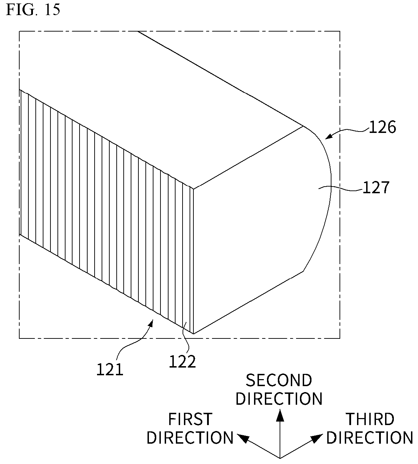

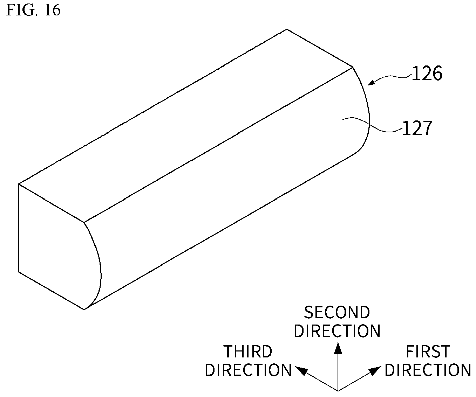

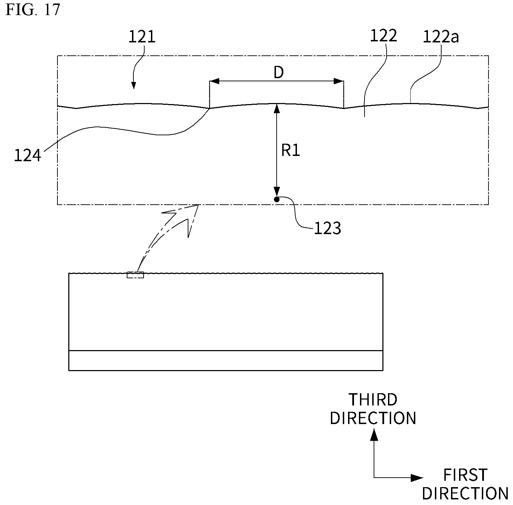

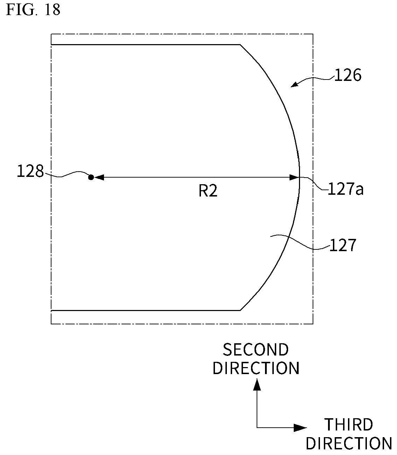

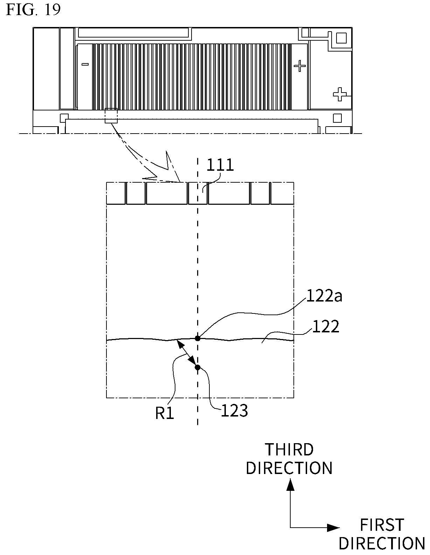

Specifically, FIG. 14 is a view for describing the light emitting unit according to the embodiment of the present invention, FIG. 15 is a view for describing the first lens surface of the LiDAR apparatus according to the embodiment of the present invention, FIG. 16 is a view for describing the second lens surface of the LiDAR apparatus according to the embodiment of the present invention, FIG. 17 is a view for describing the first unit pattern of the LiDAR apparatus according to the embodiment of the present invention, FIG. 18 is a view for describing the second unit pattern of the LiDAR apparatus according to the embodiment of the present invention, and FIG. 19 is a view for describing a relationship between the light source and the first lens surface of the LiDAR apparatus according to the embodiment of the present invention.

First, referring to FIGS. 14 to 19, as illustrated in FIG. 14, the LiDAR apparatus according to the embodiment of the present invention may include the light source unit 110, the second lens unit 120, and the volume Bragg grating V arranged side by side in a third direction.

Here, the volume Bragg grating V is illustrated for describing the optical path according to the embodiment of the present invention to be described below, and the volume Bragg grating V is merely disposed for describing another embodiment of the present invention and the movement of the optical path according to the embodiment of the present invention, and the present invention is not necessarily limited to the volume Bragg grating V being disposed as described.

First, the light source unit 110 may emit light to the second lens unit 120 and may be a set of a plurality of light sources 111 that emit light. Here, a plurality of light sources 111 may be disposed in a first direction, each elongated in the third direction. In addition, the light sources 111 may be diodes that emit light from a side surface, that is, an end portion in the third direction, and are not necessarily limited thereto.

That is, the LiDAR apparatus according to the embodiment of the present invention may include the second lens unit 120 including a first lens surface 121 disposed to face the light source unit 110 and a second lens surface 126 spaced apart from the first lens surface 121 and disposed to face the first lens surface 121, the first lens surface 121 includes a plurality of first unit patterns 122 disposed in the first direction perpendicular to the third direction, the first unit patterns 122 extend in a second direction perpendicular to the first direction, and the second lens surface 126 includes a second unit pattern 127 extending in the first direction.

In this case, the third direction may refer to a direction from the light source unit 110 to the second lens unit 120, the first direction may be perpendicular to the third direction and may refer to a direction in which the first unit patterns 122 are arranged, and the second direction may be perpendicular to the first direction and the third direction and may refer to a direction in which the first unit patterns 122 extend.

In addition, a length of the light source unit 110 in the first direction may be relatively shorter than a length of the first lens surface 121 in the first direction, thereby preventing loss of light due to errors occurring in a manufacturing process or due to a divergence angle generated from the light source unit 110, and the present invention is not necessarily limited to the above.

Meanwhile, as illustrated in FIGS. 15 and 16, the first lens surface 121 and the second lens surface 126 have an asymmetric shape and may have an aspherical shape.

This may be because a direction in which a path of light incident on the first lens surface 121 is collected as collimated light and a direction in which the path of light is collected as collimated light after passing through the second lens surface 126 are different from each other.

Briefly stated, on the first lens surface 121 according to the embodiment of the present invention, light emitted by the light source unit 110 is incident and is collected in the first direction, and on the second lens surface 126, emitted light may be collected to the second lens surface 126.

That is, while passing through the first lens surface 121 and the second lens surface 126, light emitted by the light source unit 110 may be emitted in the third direction as collimated light that is parallel in the first direction and the second direction.

In this case, as described above, the plurality of first unit patterns 122 may be arranged in the first direction to form the first lens surface 121, and a single second unit pattern 127 may extend in the first direction to form the second lens surface 126.

In addition, the plurality of first unit patterns 122 may extend in the second direction.

Such a disposition may reflect the specificity of the first lens surface 121 that collects light in the first direction and the specificity of the second lens surface 126 that collects light in the second direction.

For example, due to characteristics of light passing through a convex pattern, an optical path may be changed according to a refractive index while passing through a convex surface, and in the case of the first lens surface 121, since light needs to be collected in the first direction, light may be collected through the plurality of first unit patterns 122, which may prevent loss of light caused by the divergence angle of light due to characteristics of the light source unit 110 that emits light.

Meanwhile, in the detailed description of the present invention, it is mentioned that each of the first unit patterns 122 and the second unit patterns 127 according to the present invention is aspherical, but this is mentioned as an aspherical shape based on a case in which the first unit pattern 122 is regarded as an individual lens, and the first lens surface 121 formed by a set of the first unit patterns 122 may correspond to a surface having multiple curvatures formed by a set of the aspherical first unit patterns 122.

That is, the fact that the first lens surface 121 is aspherical means that the first lens surface 121 has a lens shape other than a spherical shape, and does not necessarily mean that the first lens surface 121 is formed as an aspherical shape having a single curvature.

In drawings and a detailed description to be described below, as described above, the first lens surface 121 is a set of the first unit patterns 122 each having an aspherical shape when determined as an individual lens and thus is referred to as an aspherical shape, the second lens surface 126 is an extending shape of the second unit pattern 127 and thus is an aspherical shape, and the fact that the first lens surface 121 and the second lens surface 126 are aspherical may mean that each of the first lens surface 121 and the second lens surface 126 does not take a spherical shape or a partial spherical shape based on an overall shape.

Meanwhile, as illustrated in FIG. 17, the plurality of first unit patterns 122 may be disposed on the first lens surface 121 in the first direction.

In addition, the first unit pattern 122 may be disposed to have an arc shape based on an axis parallel to the second direction.

More specifically, when defining a third axis 123 parallel to the second direction with respect to the second lens unit 120, the first unit pattern 122 may have an arc shape with a first distance R1 from the third axis 123, and a recess portion 124 may be disposed between adjacent first unit patterns 122.

In this case, the first distance R1 does not represent forming a part of a circle based on the third axis 123, but illustrates a part of an axis that serves as a reference of the arc shape formed by the first unit pattern 122, and the third axis 123 is any one of a plurality of reference axes on which the first unit patterns 123 are formed, but a set of reference axes forming the first unit patterns 122 may be arranged in the third direction together with the third axis 123.

Here, a distance between adjacent recess portions 124 may be the same, and, by defining an outermost point of the first unit pattern 122 in the third direction, more specifically, an outermost point in a direction facing the light source unit 110, as a first unit pattern 122a, a distance between adjacent first unit patterns 122a may be the same.

In other words, the first unit pattern 122a may be a radially outermost point of the first unit pattern 122 in the third direction.

That is, the first unit pattern 122 may have an arc shape with the first distance R1 based on the third axis 123, the first unit pattern 122a facing the light source unit 110 in the third direction may be disposed, a distance between the first unit patterns 122a may be the same, and a distance between the recess portions 124 disposed between the first unit patterns 122 may also be the same.

Accordingly, light emitted by the light source 111 may have uniform collimated light.

In addition, the first unit pattern 122 may be a column shape in which a distance between the third axis 123 and the first unit pattern 122a is the same in the second direction.

That is, in the first unit pattern 122, the distance between the third axis 123 and the first unit pattern 122a in the second direction may be the same as the first distance R1.

Meanwhile, as illustrated in FIG. 18, the second unit pattern 127 of the second lens surface 126 may be disposed to have an arc shape based on an axis parallel to the first direction similarly to the first lens surface 121.

More specifically, when defining a fourth axis 128 parallel to the first direction based on the second lens unit 120, the second unit pattern 127 may have an arc shape with a second distance R2 from the fourth axis 128.

Here, the second unit pattern 127 may form an outermost point relatively far from the light source unit 110 in the third direction, and when defining the outermost point of the second unit pattern 127 as a second outermost point 127a, a distance between the fourth axis 128 and the second outermost point 127a may be the second distance R2.

Accordingly, light that passes through the first lens surface 121 may be uniform collimated light in the first direction and the second direction.

In other words, the second outermost point 127a may be a radially outermost point of the second unit pattern 127 in the third direction.

Here, the second unit pattern 127 may be a semi-cylindrical shape in which the distance between the fourth axis 128 and the second outermost point 127a is the same in the first direction.

That is, in the second unit pattern 127, the distance between the fourth axis 128 and the second outermost point 127a in the first direction may be the same as the second distance R2.

To summarize, since the plurality of first unit patterns 122 are disposed in the first direction, the first lens surface 121 may be disposed to have a plurality of convex surfaces in the first direction, and since the second lens surface 126 extends in the first direction as the single second unit pattern 127, the second lens surface 126 may be disposed to have a single convex surface in the second direction.

In this case, the second distance R2 does not represent forming a part of a circle based on the fourth axis 128, but illustrates a part of an axis that serves as a reference of the arc shape formed by the second unit pattern 127, and the fourth axis 128 is any one of a plurality of reference axes on which the second unit patterns 127 are formed, but a set of reference axes forming the second unit patterns 127 may be arranged in the third direction together with the fourth axis 128.

Here, the third axis 123 forming the first unit pattern 122 and the fourth axis 128 forming the second unit pattern 127 may be disposed to be perpendicular to each other.

More specifically, since the first lens surface 121 collects light in the first direction and the second lens surface 126 collects light in the second direction, curvatures of the first lens surface 121 and the second lens surface 126 need to be asymmetrically formed, and in order to collect light in a single direction for each surface, it may be preferable to take an aspherical shape as in the first lens surface 121 and the second lens surface 126 according to the embodiment of the present invention.

That is, the first lens surface 121 that collects light in the first direction may have a form in which a plurality of first unit patterns 122 are disposed in the first direction due to a form in which a plurality of light sources 111 are disposed in the first direction.

In addition, the light sources 111 may be defined as being emitted from a single point based on the second direction, and accordingly, unlike the first lens surface 121, the second lens surface 126 may be formed as the single second unit pattern 127.

Here, in the second direction, the light sources 111 may have a single disposition form and the second lens surface 126 may be formed as the single second unit pattern 127, thereby enabling uniform collimated light to be output through the single second unit pattern 127.

In this case, to distinguish between the second lens surface 126 and the second unit pattern 127, the second lens surface 126 may refer to a surface of a semi-cylinder formed by the second unit pattern 127, and the second unit pattern 127 may refer to a pattern that forms a semi-cylinder.

That is, the second lens surface 126 may refer to the surface itself, and the second unit pattern 127 may refer to the pattern itself that forms the second lens surface 126, which is the same also in the following description, and the second unit pattern 127 and the second lens surface 126 may have the same meaning in a cross-sectional shape.

However, the first lens surface 121 may be a surface formed by a set of a plurality of first unit patterns 122, the first lens surface 121 may refer to the surface itself formed by the plurality of first unit patterns 122, and the first unit pattern 122 may refer to a pattern formed as a cross-section of the second lens unit 120, taken along the first direction, is viewed in the second direction.

That is, when the cross-sectional shape of the second lens unit 120 is viewed in the second direction, a set of the plurality of first unit patterns 122 forms the first lens surface 121, and when the cross-sectional shape of the second lens unit 120 is viewed in the first direction, the shape of the first unit pattern 122 varies according to a cut cross-sectional shape, so that the cross-sectional shape of the second lens unit 120 as viewed in the first direction may be referred to as the first lens surface 121.

Meanwhile, as illustrated in FIG. 19, based on the foregoing, the light source unit 110 includes the plurality of light sources 111, and the plurality of light sources 111 may emit light from a side surface.

Specifically, the light sources 111 may emit light to the first lens surface 121, and the light sources 111 may be disposed to overlap the first unit patterns 122 in the third direction.

More specifically, the third axis 123 forming the first unit pattern 122 and the light source 111 overlap in the third direction, and, in the third direction, the light sources 111, the first unit pattern 122a, and the third axis 123 may be disposed side by side to overlap.

That is, in the third direction, the recess portions 124 and the light sources 111 do not overlap each other, and may be disposed similarly to a manner in which the recess portions 124 are positioned between the light sources 111 in the first direction.

Accordingly, light diverging based on the light source 111 may pass through the first lens surface 121 and be emitted as uniform collimated light based on the first direction.

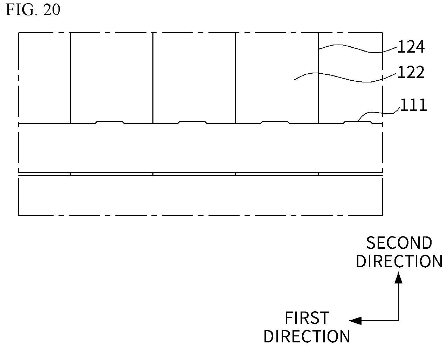

In order to describe in more detail based on the foregoing disposition and configuration, reference may be made to FIGS. 20 to 25.

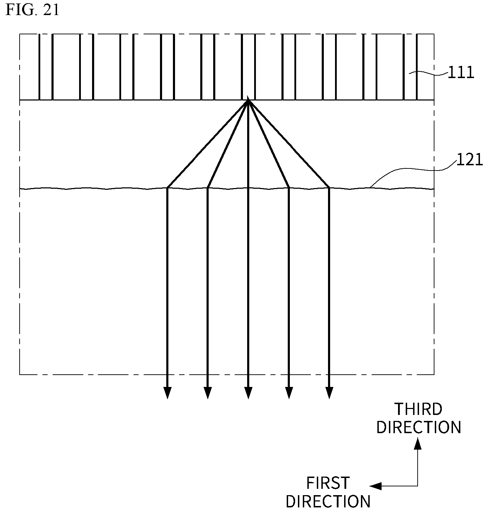

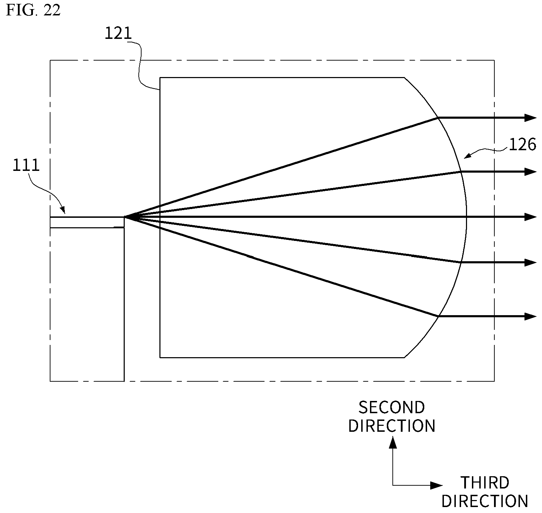

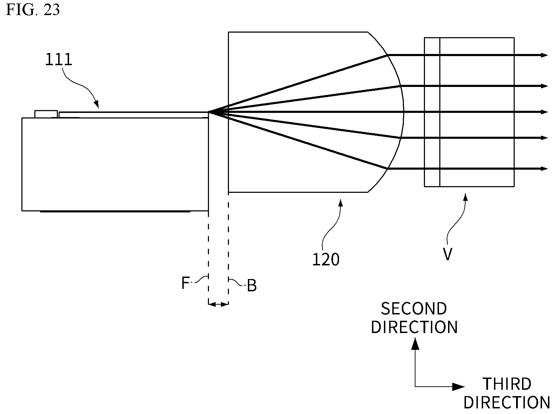

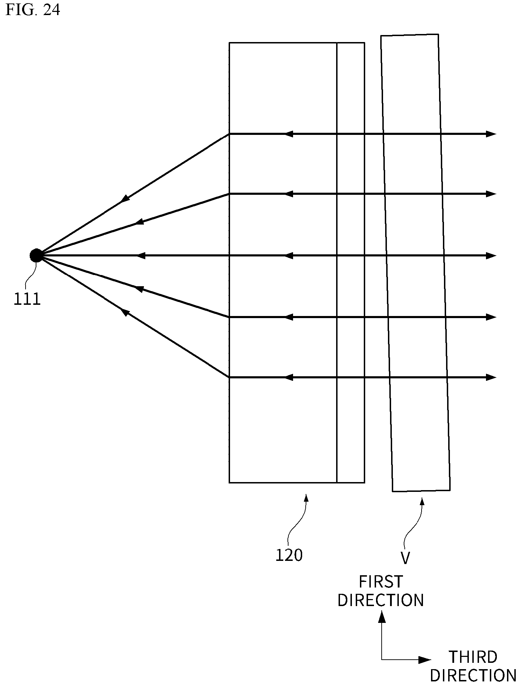

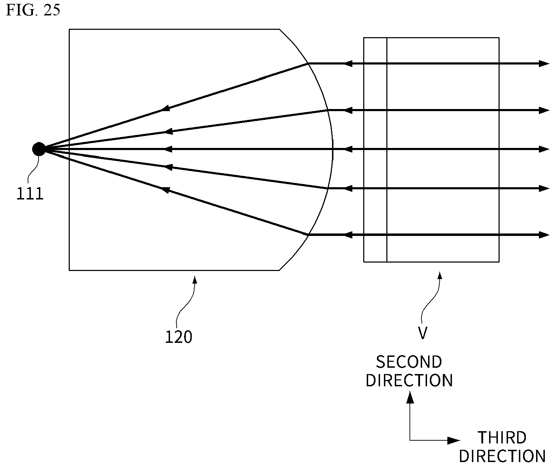

Specifically, FIG. 20 is a view for describing the first unit pattern and the light emitting unit of the LiDAR apparatus according to the embodiment of the present invention, FIG. 21 is a view for describing an optical path through the first lens surface of the LiDAR apparatus according to the embodiment of the present invention, FIG. 22 is a view for describing an optical path through the second lens surface of the LiDAR apparatus according to the embodiment of the present invention, FIG. 23 is a view for describing a focus of the LiDAR apparatus according to the embodiment of the present invention, FIG. 24 is a view for describing a propagation optical path and a reflected optical path through the first lens surface of the LiDAR apparatus according to the embodiment of the present invention, and FIG. 25 is a view for describing a propagation optical path and a reflected optical path through the second lens surface of the LiDAR apparatus according to the embodiment of the present invention.

First, as illustrated in FIG. 20, a plurality of light sources 111 may be arranged in a first direction, a plurality of first unit patterns 122 may be disposed in the first direction, and the first unit patterns 122 and the light sources 111 may overlap each other in a third direction.

In addition, the light sources 111 emit light to a side surface, and spaces recessed in the second direction may be disposed between the light sources 111.

Accordingly, the light source unit 110 and the first lens surface 121 may be disposed such that the first unit patterns 122 and the light sources 111 overlap each other and the recess portions 124 and the recessed spaces of the light source unit 110 overlap each other.

Here, as described above, the first lens surface 121 collects light in the first direction, and accordingly, as illustrated in FIG. 21, light emitted by the light source 111 may be incident on the first lens surface 121 with a divergence angle in the first direction.

In this case, light incident on the first lens surface 121 may be collected in the first direction by the plurality of first unit patterns 122, and a set of optical paths collected in the first direction and not collected in the second direction may be formed in a process of heading toward the second lens surface 126 from the first lens surface 121.

Meanwhile, in a process in which light emitted by the light source unit 110 passes through the first lens surface 121 with a divergence angle in the second direction and then passes through the second lens surface 126, the light may be collected in the second direction.

That is, while passing through the first lens surface 121 and the second lens surface 126, a set of optical paths collected in the first direction and the second direction may be formed, and light emitted by the light source unit 110 may be emitted as collimated light through the second lens unit 120.

When collimated light is emitted in this way, light that would otherwise be lost outside a separate lens for adjusting a field of view may be prevented, thereby increasing efficiency.

Meanwhile, to describe the present invention in more detail, the light source 111, the second lens unit 120, and the volume Bragg grating V may be disposed in the third direction in a manner similar to FIG. 1.

In this case, a focus F of the second lens unit 120 according to the embodiment of the present invention is formed based on the light sources 111 that emit light, and characteristics of the first lens surface 121 and the second lens surface 126 may be as follows.

[Table 1]

| Item | First lens surface (121) | Second lens surface (126) |
|---|---|---|
| Material | n (refractive index) = 1.89406 @ 1430 nm | |
| Thickness (mm) | 4.7 | |
| Divergence angle of light source (111) (2*NA) (deg) | 25.5 | 77.9 |
| Numerical Aperture (1/(2*FNO) | 0.22 | 0.63 |
| F-number | 2.27 | 0.80 |
| Effective focal length (EFL) (mm) | 0.538 | 3.002 |
| Back focal length (BFL) (mm) | 0.541 | 0.541 |
| Radius (mm) | 0.4810 | -2.7018 |
| Conic constant | -3.5874 | -0.7648 |

First, the light emitted by the light source 111 may be incident on the first lens surface 121 with the divergence angle of 25.5 degrees, and on the second lens surface 126 with the divergence angle of 77.9 degrees.

More specifically, light emitted by the light source 111 may diverge at 25.5 degrees in the first direction in which the first lens surface 121 collects light and diverge at 77.9 degrees in the second direction in which the second lens surface 126 collects light, light incident at 25.5 degrees by the plurality of first unit patterns 122 arranged on the first lens surface 121 may be collected in the first direction and output as collimated light, and light passing through the second lens surface 126 in the second direction may be collected in the second direction and output as collimated light.

In addition, since the light passing through the first lens surface 121 and the second lens surface 126 according to the embodiment of the present invention has the divergence angle of 25.5 degrees in the first direction and 77.9 degrees in the second direction as described above, the refractive index of the second lens unit 120 may be 1.89406 so that the light passing through the second lens unit 120 is output as collimated light.

Accordingly, the second lens unit 120 according to the embodiment of the present invention may collect, in the first direction and the second direction, light emitted by the light source 111 and output the light as collimated light, thereby providing an effect of preventing loss of light that deviates from the second lens unit 120.

That is, looking at the refractive index of the second lens unit 120, it may be desirable to have a refractive index within 1.8 to 2.0.

In addition, a designed divergence angle of the light source 111 may be calculated with respect to a designed numerical aperture (Numerical Aperture; hereinafter, "designed NA") to be described below, by Equation 1 below.

[Designed divergence angle of light source 111] = 2 * n * sin(designed NA)                    [Equation 1]

This indicates that the designed NA adjusts an angular range at an aperture capable of receiving or emitting light, such that the light output as collimated light is reflected from an object without loss, thereby obtaining higher resolution through the light.

Here, the designed NA may be described through Equations 2 and 3 below.

$$[\text{Equation 2}]$$

$$[\text{Designed NA}] = 1 / (2 * \text{F-Number})$$

$$[\text{Equation 3}]$$

$$[\text{F-Number}] = \text{focus (F)} / \text{diameter (D)}$$

As shown, the designed NA is designed to be inversely proportional to the F-Number, and since the F-number is inversely proportional to the diameter of the incident lens surface, the F-number of the first lens surface 121 relatively adjacent to the light source 111 may be relatively greater than the F-number of the second lens surface 126.

As described above, this may be a preferred design form for obtaining higher resolution by preventing loss of light in the process in which light emitted by the light source 111 is emitted to an object or is reflected from the object and then is incident, and is not necessarily limited to the aforementioned description.

Meanwhile, when the F-number of the first lens surface 121 of the second lens unit 120 is defined as FNO-1 and the F-number of the second lens surface 126 is defined as FNO-2, FNO-1 and FNO-2 may fall within a range as in Equation 4 below.

[Equation 4]

$$0.2 < FNO\text{-}2 \,/\, FNO\text{-}1 < 0.5$$

That is, according to Equation 4, the F-number of the second lens surface 126 may be 0.2 to 0.5 times the F-number of the first lens surface 121.

This may correspond to a preferred form according to differences such as arrangement of the light sources 111 in the first direction, a form in which the plurality of first unit patterns 122 are disposed in the first direction, and a difference between the diameter of the first lens surface 121 in the first direction and the diameter of the second lens surface 126 in the second direction, thereby enabling uniform collimated light to be output.

Meanwhile, when an effective focal length of the first lens surface 121 of the second lens unit 120 is defined as EFL-1 and when a effective focal length of the second lens surface 126 is defined as EFL-2, EFL-1 and EFL-2 may fall within a range as in Equation 5 below.

[Equation 5]

$$4 < EFL\text{-}2 \,/\, EFL\text{-}1 < 8$$

That is, according to Equation 5, the effective focal length of the second lens surface 126 may be 4 to 8 times the effective focal length of the first lens surface 121.

These may correspond to values when the first lens surface 121 and the second lens surface 126 are each taken as a reference, and, due to a difference in effective focal lengths caused by a difference in arc shapes of the first lens surface 121 and the second lens surface 126, the optical path of light may be output as collimated light, and, by outputting uniform collimated light, high resolution may be output without loss of light.

Meanwhile, a back focal length BFL of the first lens surface 121 may correspond to a distance to the focus F based on the first unit pattern 122a, and in the case of the second lens surface 126, since there is no last lens surface for determining the back focal length BFL, the first unit pattern 122a of the first lens surface 121 may likewise be used as a reference.

That is, the back focal length of the first lens surface 121 and the back focal length BFL of the second lens surface 126 may ultimately be the same as a distance between a back surface B of the second lens unit 120 and the focus F.

However, from an extended perspective, the back focal lengths BFL of the first lens surface 121 and the second lens surface 126 are the same, but since the back focal lengths BFL correspond to the distance between the light source 111 and the second lens unit 120, a distance of the back focal length BFL may preferably be within 0.3 to 1.0.

When the back focal length BFL is designed within the specified range, a problem of loss of light at the first lens surface 121, which occurs due to a divergence angle of light emitted by the light source 111, may be prevented, and collimated light may be output without loss of light, thereby enabling high resolution to be output.

Meanwhile, the first distance R1 of the first lens surface 121 of the second lens unit 120 according to the embodiment of the present invention may correspond to the distance between the third axis 123 forming the first unit pattern 122 and the first outermost point 122a as described above, and assuming that, with respect to the second lens unit 120, a traveling direction of light in the third direction is negative and a direction toward the light source 111 is positive, the first distance R1 may be 0.4810.

In addition, the second distance R2 of the second lens surface 126 of the second lens unit 120 may correspond to the distance between the fourth axis 128 forming the second unit pattern 127 and the first outermost point 127a as described above, and assuming that, with respect to the second lens unit 120, the traveling direction of light in the third direction is negative and the direction toward the light source 111 is positive, the second distance R2 may be -2.7018.

This may be due to a size difference between the first unit pattern 122 corresponding to a relatively small unit pattern and the second unit pattern 126 having a unit pattern larger than the first unit pattern 122, and this may be because, as described above, the divergence angle of light in the first direction incident on the first lens surface 121 and the divergence angle of light in the second direction passing through the second lens surface 126 are different from each other.

The first distance R1 and the second distance R2 described above may correspond to basic conditions for designing the first unit pattern 122 and the second unit pattern 126 to have arc shapes to collect light in the first direction and the second direction, and accordingly, in the first lens surface 121 formed by a set of the first unit patterns 122 and in the second lens surface 126 formed by extension of the second unit pattern 126, light is collected in the first direction and the second direction, respectively, to output collimated light, thereby preventing loss of light due to collection of light, and enabling high resolution to be output.

In addition, a conic constant of the first lens surface 121 is -3.5874, and a conic constant of the second lens surface 126 is -0.7648, as may be seen from Table 2 below.

[Table 2]

| Surface | 4th-order aspheric | 6th-order aspheric | 8th-order aspheric | 10th-order aspheric | 12th-order aspheric |
|---|---|---|---|---|---|
| Second lens surface (126) | -2.4250E-03 | -1.0307E-04 | 1.5461E-06 | -5.8078E-07 | 2.0685E-07 |

As shown, since the first lens surface 121 is a set of the plurality of first unit patterns 122, when only aspherical coefficients for the second lens surface 126 are considered, it may be preferable to apply an aspherical coefficient such that the conic constant becomes -0.7648 when the aspherical coefficient is applied to the second lens surface 126, and it may be preferable to apply a conic constant of -3.5874 to the first lens surface 121 corresponding to the second lens surface 126.

Accordingly, as described above, the first lens surface 121 and the second lens surface 126 may be formed as aspherical surfaces, and at the same time, and may output collimated light in the first direction in which the first lens surface 121 collects light and the second direction in which the second lens surface 126 collects light, respectively.

As a result, collimated light collected in the first direction and the second direction may be output and reflected from an object without loss of light, and reflected light is incident, thereby providing an advantage of outputting high resolution.

Meanwhile, when the reflective-type volume Bragg grating V is disposed in the LiDAR apparatus according to the embodiment of the present invention, light emitted by the light source 111 may pass through the second lens unit 120, be output as collimated light, and be emitted toward the reflective-type volume Bragg grating V.

However, the volume Bragg grating V may transmit a portion of the light and reflect a portion of the light, and reflected light may move toward the light source 111 along the same optical path.

That is, when such a situation is repeated, a resonance structure of light may be formed between the light source 111 and the volume Bragg grating V.

Specifically, as illustrated in FIG. 24, light emitted by the light source 111 may be collected in the first direction by the first lens surface 121 and move toward the volume Bragg grating V as collimated light, a portion of the light may be reflected by the volume Bragg grating V, and the reflected light may move toward the light source 111 along the same optical path.

In addition, as illustrated in FIG. 25, light emitted by the light source 111 may be collected in the second direction by the second lens surface 126 and move toward the volume Bragg grating V as collimated light, a portion of the light may be reflected by the volume Bragg grating V, and the reflected light may move toward the light source 111 along the same optical path.

As a result, in the present invention, the first lens surface 121 may include the first unit patterns 122, each having an arc shape with the first distance R1 based on the third axis 123, and the plurality of first unit patterns 122 may be disposed in the first direction to form the first lens surface 121.

In addition, the second lens surface 126 may include the second unit pattern 127 having an arc shape with the second distance R2 based on the fourth axis 128, and the second unit pattern 127 may extend in the first direction to form the second lens surface 126.

In addition, the third axis 123 serving as a reference for the first unit pattern 122 and the fourth axis 128 serving as a reference for the second unit pattern 127 may be perpendicular to each other, and a direction in which the first unit pattern 122 extends and a direction in which the second unit pattern 127 extends may also be perpendicular to each other.

Meanwhile, as shown in Table 1, the LiDAR apparatus 1000 according to the embodiment of the present invention is preferably applied to a wavelength band of 1350 nm to 1450 nm, that is, light emitted by the light source 111 may be in the wavelength band of 1350 nm to 1450 nm.

More specifically, a wavelength band of the light emitted by the light source 111 may be 1400 nm to 1430 nm, and based on Table 1, may preferably be 1430 nm.

As a result, 1430 nm may correspond to a wavelength band of 1.43 μm and generally fall within a wavelength band corresponding to near-infrared, and since the LiDAR apparatus 1000 senses 3D image information about a mid-to-long distance object (subject) by detecting light reflected from the object (subject), it may be preferable to apply near-infrared light suitable for mid-to-long distances.

That is, the LiDAR apparatus 1000 according to the embodiment of the present invention may preferably use the light source 111 that emits light in the wavelength band of 1350 nm to 1450 nm to increase an effect of image sensing, specifically, the light source 111 that emits light in the wavelength band of 1430 nm, and the second lens unit 120 according to the embodiment of the present invention may collect light in the wavelength band of 1430 nm and output the light as collimated light to improve resolution of 3D image information about the LiDAR apparatus 1000.

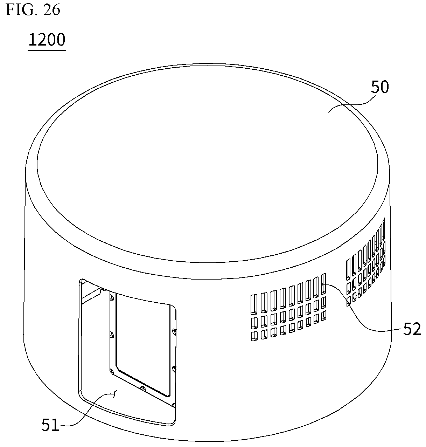

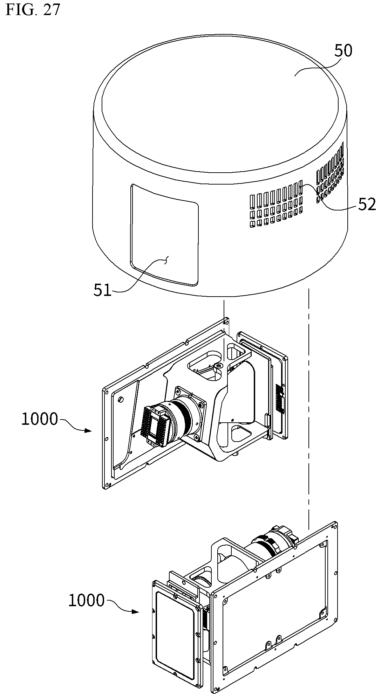

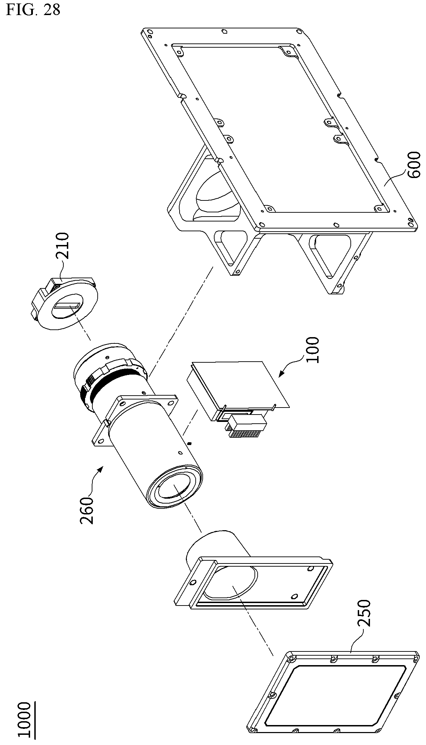

FIG. 26 is a perspective view of a LiDAR system according to the embodiment of the present invention, FIG. 27 is an exploded view of the LiDAR system according to the embodiment of the present invention, and FIG. 28 is an exploded view of a LiDAR apparatus according to the embodiment of the present invention.

Referring to FIGS. 26 to 28, the light emitting unit 100 and the light receiving unit 200 may be accommodated in a housing 50 of a LiDAR system 1200. As illustrated, one LiDAR system 1200 may include a plurality of LiDAR apparatus 1000. For example, each LiDAR apparatus 1000 included in one LiDAR system 1200 includes the light emitting unit 100 and the light receiving unit 200, and two LiDAR apparatus 1000 may be disposed to face opposite directions.

A plurality of openings may be formed in the housing 50. Among the plurality of openings, a first opening 51 may be disposed to correspond to the window 250 of the LiDAR apparatus 1000 and may serve as a passage for light emission and light reception. Among the plurality of openings, a second opening 52 may serve as a passage for discharging heat generated from the LiDAR apparatus 1000 accommodated in the housing 50.

The number of first openings 51 may be less than the number of second openings 52, and a diameter of the first opening 51 may be greater than a diameter of the second opening 52. Since the first openings 51 are disposed to correspond to the windows 250 of the LiDAR apparatus 1000, the number of first openings 51 formed in the housing 50 may be the same as the number of LiDAR apparatus 1000 accommodated in the housing 50.

Each LiDAR apparatus 1000 may include the light emitting unit 100 and the light receiving unit 200, and for this purpose, each LiDAR apparatus 1000 may further include a mount 600 on which the light emitting unit 100 and the light receiving unit 200 are mounted. The light emitting unit 100 may be disposed on a side surface of the light receiving unit 200, and both light emitted from the light emitting unit 100 and light reflected from an object and then incident on the light receiving unit 200 may pass through the window 250.

Although not illustrated in detail, the light emitting unit may include a substrate, a light source, an optical member, a shield member, and a diffusion member. The substrate may include a printed circuit board (PCB). The substrate may be connected to a connector through a flexible printed circuit board (FPCB). The light source is disposed on the substrate, and the substrate may include terminals. The light source may correspond to the light source of the light emitting unit 100 described above. That is, the light source may include a plurality of emitters disposed in an array shape. The plurality of emitters may be disposed in an m*n matrix to correspond to the pixel array of the image sensor 210 of the light receiving unit 200, and is not limited thereto. Driving of the plurality of emitters may be individually controlled or integrally controlled. The optical member may collect light emitted from the light source or may redirect an optical path of light emitted from the light source. For example, when the light source is not disposed to face the window 250, the optical member may redirect the optical path such that the light emitted from the light source is emitted through the window 250. The shield member may surround the substrate and the light source, may be referred to as a cover can, and may be a non-magnetic material, and accordingly, may block electromagnetic interference (EMI) noise. The diffusion member may be a diffuser lens or a homogenizer. The diffusion member may be disposed on the optical path of the light emitted from the light source.

The light receiving unit 200 may include a sensor unit and a lens unit. The sensor unit may include a substrate, the image sensor 210 disposed on the substrate, and the micro lens array disposed on the image sensor 210. The image sensor 210 may detect infrared rays. The image sensor 210 may detect a light beam of a specific wavelength among the infrared rays. The lens unit may include a lens barrel 260, a plurality of lenses, a filter, and a lens hood 270. The image sensor 210 may detect light that has passed through the filter. The image sensor 210 may detect light in a wavelength band of the light source. Accordingly, the light emitted from the light source and reflected by the subject may be detected by the image sensor 210, thereby sensing 3D image information about the subject.

As described above, the LiDAR apparatus according to the embodiment of the present invention may be a mechanical LiDAR apparatus. Accordingly, the LiDAR apparatus according to the embodiment of the present invention may be designed to rotate 360 degrees by a motor.

The exemplary embodiments according to the present invention have been examined, and the fact that the present invention can be embodied in other specific forms in addition to the embodiments described above without departing from the spirit or scope of the present invention is obvious to those skilled in the art.

Therefore, the above-described embodiments are to be regarded as illustrative and not restrictive, and accordingly, the present invention is not limited to the above description but may be modified within the scope of the appended claims and their equivalents.

**Claims**

**1.** A Light Detection and Ranging (LiDAR) apparatus comprising:

a light emitting unit configured to emit an optical signal to an object; and
a light receiving unit configured to receive an optical signal reflected from the object,
wherein the light receiving unit includes:

an image sensor including a light receiving surface having a long axis in a first direction;
a first lens unit disposed on the image sensor;
a window disposed on the first lens unit; and
a filter disposed between the image sensor and the window, and
at least one of the filter and the window is tilted with respect to the light receiving surface of the image sensor about a virtual first axis parallel to the long axis or about a second axis inclined with respect to the first axis.

2. The LiDAR apparatus of claim 1, wherein the image sensor includes a pixel array disposed in the first direction and a second direction perpendicular to the first direction and the number of pixels disposed in the first direction is greater than the number of pixels disposed in the second direction, and
at least one of the filter and the window is tilted about the first direction as a rotation axis.

3. The LiDAR apparatus of claim 2, wherein each of the filter and the window is tilted about the first direction as the rotation axis.

4. The LiDAR apparatus of claim 1, comprising a micro lens array disposed between the image sensor and the first lens unit and having a long axis in the first direction,
wherein at least one of the filter and the window is tilted with respect to the micro lens array about a virtual axis parallel to the long axis of the micro lens array.

5. The LiDAR apparatus of claim 4, wherein the micro lens array includes a plurality of micro lenses disposed in the first direction and a second direction perpendicular to the first direction, and
the number of micro lenses disposed in the first direction is greater than the number of micro lenses disposed in the second direction.

6. The LiDAR apparatus of claim 1, wherein the image sensor includes an m*n pixel array, and a ratio of m to n is 8 or greater.

7. The LiDAR apparatus of claim 3, wherein one of the filter and the window is tilted clockwise about the first direction as the rotation axis, and the other of the filter and the window is tilted counterclockwise about the first direction as the rotation axis.

8. The LiDAR apparatus of claim 1, wherein the light emitting unit includes:

a light source unit; and
a second lens unit including a first lens surface facing the light source unit and a second lens surface disposed opposite to the first lens surface,
wherein the first lens surface includes a plurality of first unit patterns arranged in the first direction and the first unit patterns extend in a second direction perpendicular to the first direction, and
the second lens surface includes a second unit pattern having a long axis extending in the first direction.

9. The LiDAR apparatus of claim 8, wherein the first lens surface and the second lens surface are asymmetric with respect to each other.

10. The LiDAR apparatus of claim 9, wherein the first unit pattern has an arc shape based on an axis parallel to the second direction, and
the second unit pattern has an arc shape based on an axis parallel to the first direction.

FIG. 1

<u>1000</u>

| | |
|---|---|
| LIGHT EMITTING UNIT | 100 |
| LIGHT RECEIVING UNIT | 200 |
| INFORMATION GENERATION UNIT | 300 |
| CONTROL UNIT | 400 |

| PLATE | MOTOR | 500 |
|---|---|---|
| 510 | 520 | |

FIG. 2

FIG. 3

220A

220A3

220A2

220A1

SECOND
DIRECTION

FIRST
DIRECTION

FIG. 4

220A2    220A1    220B

220A3

210

THIRD
DIRECTION

FIRST
DIRECTION

220A:220A1, 220A2, 220A3

FIG. 5

220A2    220A1    220B

220A3

210

THIRD
DIRECTION

SECOND
DIRECTION

220A:220A1, 220A2, 220A3

FIG. 6

FIRST
DIRECTION

THIRD
DIRECTION

FIG. 7

FIG. 8

Original image

ghost image

effective area

FIG. 9

| Ghost # | OPTICAL PATHlayout |
|---------|---------------------|
| 1       | |
| 2       | |
| 3       | |
| 4       | |
| 5       | |

FIG. 10

| WINDOW TILT (DEGREES) | 0 | 0 | -2 | -2 |
|---|---|---|---|---|
| FILTER TILT (DEGREES) | 0 | 2 | 0 | 2 |
| GHOST ANALYSIS IMAGE | | | | |

original image

Ghost image

FIG. 11

EP 4 787 021 A1

29

FIG. 12

FIG. 13

FIG. 14

SECOND
DIRECTION

FIRST
DIRECTION

THIRD
DIRECTION

FIG. 15

126

127

121 122

SECOND
DIRECTION

FIRST
DIRECTION

THIRD
DIRECTION

FIG. 16

126

127

SECOND
DIRECTION

THIRD
DIRECTION

FIRST
DIRECTION

FIG. 17

THIRD
DIRECTION

FIRST
DIRECTION

FIG. 18

FIG. 19

THIRD
DIRECTION

FIRST
DIRECTION

FIG. 20

124
122
111

SECOND
DIRECTION

FIRST
DIRECTION

FIG. 21

THIRD
DIRECTION

FIRST
DIRECTION

FIG. 22

SECOND
DIRECTION

THIRD
DIRECTION

FIG. 23

111

120

V

F B

SECOND
DIRECTION

THIRD
DIRECTION

FIG. 24

111

120

V

FIRST
DIRECTION

THIRD
DIRECTION

FIG. 25

111

120

V

SECOND
DIRECTION

THIRD
DIRECTION

EP 4 787 021 A1

FIG. 26

<u>1200</u>

FIG. 27

FIG. 28

## INTERNATIONAL SEARCH REPORT

| International application No. |
|---|
| **PCT/KR2024/012767** |

### A. CLASSIFICATION OF SUBJECT MATTER

**G01S 17/89**(2006.01)i; **G01S 7/481**(2006.01)i; **G02B 3/00**(2006.01)i; **G02B 19/00**(2006.01)i; **G02B 27/09**(2006.01)i

According to International Patent Classification (IPC) or to both national classification and IPC

### B. FIELDS SEARCHED

Minimum documentation searched (classification system followed by classification symbols)

G01S 17/89(2006.01); G01C 3/08(2006.01); G01J 1/06(2006.01); G01S 17/08(2006.01); G01S 7/48(2006.01); G01S 7/481(2006.01); G01S 7/486(2006.01); G02B 7/182(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(LiDAR, Light Detection and Ranging), 광(light), 렌즈(lens), 이미지 센서 (image sensor), 윈도우(window), 필터(filter)

### C. DOCUMENTS CONSIDERED TO BE RELEVANT

| Category* | Citation of document, with indication, where appropriate, of the relevant passages | Relevant to claim No. |
|---|---|---|
| X | US 2020-0200875 A1 (CONTINENTAL AUTOMOTIVE SYSTEMS, INC.) 25 June 2020 (2020-06-25)<br>See paragraphs [0023]-[0029], claims 1 and 11 and figures 6-12. | 1-3,6 |
| Y | | 4-5 |
| A | | 7-10 |
| Y | KR 10-2016-0064592 A (LG ELECTRONICS INC.) 08 June 2016 (2016-06-08)<br>See paragraphs [0027]-[0028] and figures 1-7. | 4-5 |
| A | US 2014-0293264 A1 (MIYAZAKI, Hidenori) 02 October 2014 (2014-10-02)<br>See claims 1-18 and figures 1-18. | 1-10 |
| A | KR 10-2020-0102900 A (SOS LAB CO., LTD.) 01 September 2020 (2020-09-01)<br>See claims 1-9 and figures 1-8. | 1-10 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 November 2024** | **25 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/012767**

| C. | DOCUMENTS CONSIDERED TO BE RELEVANT | |
|---|---|---|
| Category* | Citation of document, with indication, where appropriate, of the relevant passages | Relevant to claim No. |
| A | JP 2007-085832 A (OMRON CORP.) 05 April 2007 (2007-04-05) See claims 1-6 and figures 1-2. | 1-10 |

Form PCT/ISA/210 (second sheet) (July 2022)

**INTERNATIONAL SEARCH REPORT**
Information on patent family members

International application No.

**PCT/KR2024/012767**

| Patent document cited in search report | | | Publication date (day/month/year) | Patent family member(s) | | | Publication date (day/month/year) |
|---|---|---|---|---|---|---|---|
| US | 2020-0200875 | A1 | 25 June 2020 | US | 11947038 | B2 | 02 April 2024 |
| | | | | WO | 2020-132599 | A1 | 25 June 2020 |
| KR | 10-2016-0064592 | A | 08 June 2016 | KR | 10-2372856 | B1 | 10 March 2022 |
| | | | | US | 10436634 | B2 | 08 October 2019 |
| | | | | US | 2016-0153830 | A1 | 02 June 2016 |
| US | 2014-0293264 | A1 | 02 October 2014 | CN | 104076365 | A | 01 October 2014 |
| | | | | EP | 2784541 | A1 | 01 October 2014 |
| | | | | JP | 2014-209078 | A | 06 November 2014 |
| | | | | JP | 5683648 | B2 | 11 March 2015 |
| KR | 10-2020-0102900 | A | 01 September 2020 | KR | 10-2020-0102899 | A | 01 September 2020 |
| | | | | KR | 10-2263182 | B1 | 09 June 2021 |
| | | | | KR | 10-2263183 | B1 | 09 June 2021 |
| JP | 2007-085832 | A | 05 April 2007 | | None | | |

Form PCT/ISA/210 (patent family annex) (July 2022)